# EUROPÄISCHE PATENTANMELDUNG

(11) **EP 1 009 122 A2**
(43) Veröffentlichungstag der Anmeldung: **14.06.2000**
(21) Anmeldenummer: 99123804.9
(22) Anmeldetag: 01.12.1999
(51) Int. Cl.: H04L 1/00, H04L 1/08, H04L 25/14

(54) **Verfahren zur Datenübertragung**

(30) Priorität: 11.12.1998 DE 19857154
(71) Anmelder: DaimlerChrysler AG, 70567 Stuttgart (DE)
(72) Erfinder: Baumgartner, Alfred, 86529 Schrobenhausen (DE); Braunwarth, Hubert, 86316 Friedberg (DE); Gold, Robert, 85276 Pfaffenhofen (DE); Grosshauser, Frank, 86529 Mühlried (DE); Kuttenreich, Josef, 86554 Pöttmes (DE); Reichart, Ralf, 86551 Aichach (DE); Schilling, Gerhard, 86561 Aresing (DE); Schmid, Wolfgang, 86564 Brunnen (DE); Steiner, Werner, 86529 Schrobenhausen (DE)
(74) Vertreter: Kolb, Georg

(57) **Zusammenfassung**

Bei einem Verfahren zur Datenübertragung, bei dem binäre Originaldaten (D0, ..., Dm) von einem Sender an eine vorzugsweise über eine binäre Grundadresse (A0, ..., An) ausgewählte Einheit eines Empfängers (1), vorzugsweise an ein Register (80, ..., 87), übergeben werden, wobei die Originaldaten (D0, ..., Dm) und vorzugsweise auch die Grundadresse (A0, ..., An) über eine oder mehrere Datenleitungen übertragen werden, werden von dem Sender auch die invertierten Originaldaten (Inversionsdaten) (D0', ..., Dm') und vorzugsweise auch die komplementäre Grundadresse (Komplementäradresse) (A0', ..., An', Ak) übertragen.

Es werden im Empfänger die übertragenen Inversionsdaten (D0', ..., Dm') und vorzugsweise die übertragene Komplementäradresse (A0', ..., An', Ak) invertiert, die übertragene Grundadresse (A0, ..., An) und die übertragenen Originaldaten (D0, ..., Dm) mit der invertierten Komplementäradresse (A0' , ..., An') und den invertierten Inversionsdaten (D0', ..., Dm') jeweils bitweise (0, ..., n) bzw. (0, ..., m) verglichen, oder aber anstelle der Inversion und nachfolgendem Vergleich eine EXOR-Verknüpfung von Grundadresse (A0, ..., An) und (D0, ..., Dm) mit Komplementäradresse (A0', ..., An') und Inversionsdaten (D0', ..., Dm') durchgeführt. Nur bei insgesamt bitweiser Übereinstimmung werden die übertragenen Originaldaten (D0, ..., Dm) an die über die übertragene Grundadresse (A0, ..., An) ausgewählte Einheit übergeben. Dadurch ist eine fehlerfreie Datenübertragung sichergestellt.

Verfahren sowie Schaltungsanordnung werden insbesondere für die Datenübertragung in Insassenschutzsystemen zwischen einer Zentraleinheit und Insassenschutzeinrichtungen verwendet.

## Beschreibung

Die Erfindung betrifft ein Verfahren zur Datenübertragung, bei dem binäre Originaldaten von einem Sender an eine Einheit eines Empfängers, vorzugsweise an ein Register, übergeben werden, wobei die Originaldaten über eine oder mehrere Datenleitungen übertragen werden.

Bei bekannten Datenübertragungsverfahren ist der Datenaustausch bidirektional, geschieht parallel und beruht auf einer Übertragung von Originaldaten und vorzugsweise auch einer Grundadresse, über die die Einheit ausgewählt wird. Der Übertragungskanal (Datenbus) kann dabei beliebig breit gewählt werden. Die Originaldaten werden zeitversetzt (gemultiplext) auf den gleichen Leitungen wie die Grundadresse übertragen, wobei zuerst Grundadresse und danach Originaldaten auf den Datenbus geschickt werden. Über die Grundadresse wird die Einheit ausgewählt, der die Originaldaten übergeben werden sollen.

Zur Überprüfung, ob die Originaldaten und die Grundadresse fehlerfrei übertragen worden sind, werden jedem zu übertragenden Datenwort in der JP 02-113340 ein Paritätsbit, in der DE 1524 009 oder der JP 62-010 941 mehrere Paritätsbits hinzugefügt, über die bestimmte Übertragungsfehler nachgewiesen werden können. Für spezielle Anwendungen, beispielsweise für die Zündansteuerung von Airbag-Systemen muß jedoch eine höhere Sicherheit bei der Datenübertragung gewährleistet sein.

Des weiteren ist beispielsweise aus der JP 02-140 030 zu entnehmen, die Übertragung von einem Sender zu einem Empfänger zu überwachen, indem eine Rückübertragung der im Empfänger invertierten Daten an den Sender und dort im Sender nach nochmaliger Invertierung ein Vergleich erfolgt.

Diese Rückübertragung ist aber für Anwendungen, wie beispielsweise für die Zündansteuerung von Airbag-Systemen, bei denen im Empfänger unmittelbar Maßnahmen ausgelöst werden, ungeeignet, denn der Empfänger erkennt nicht sofort selbst die Fehlerhaftigkeit des Empfangs. Eventuell resultieren aus einem Übertragungsfehler unmittelbar riskante Fehlreaktionen.

Analog zu einer zweifachen Invertierung ergibt sich jeweils auch die Möglichkeit, die einmal invertierten Daten mit den invertierten Daten durch ein logisches EXOR zu verknüpfen, wie dies beispielsweise für einen Paritätstest in der JP 02-113340 vorgeschlagen wird.

Bekannt ist darüber hinaus die Manchesterkodierung, bei der einerseits zur Erkennung von Einbitfehlern in der Datenübertragung, andererseits zur Taktrückgewinnung anstelle des zu übertagenden Bits jeweils neben diesem noch das dazu invertierte Bit übertragen wird.

Aus der DE 196 01 836 A1 ist darüber hinaus bekannt, digitale Datennachrichten auf zwei parallel geführten Datenleitungen zu übertragen, wobei die beiden Datenleitungen jeweils zueinander inverse Signalpegel führen.

Der vorliegenden Erfindung liegt die Aufgabe zugrunde, ein Datenübertragungsverfahren der eingangs genannten Art dahingehend zu verbessern, daß eine höhere Übertragungssicherheit bei der Datenübertragung sichergestellt ist, d.h., daß ein Datenwort von einer elektronischen Einheit zur anderen sicher und möglichst fehlerlos übertragen wird.

Diese Aufgabe wird erfindungsgemäß dadurch gelöst, daß von dem Sender auch die invertierten Originaldaten (Inversionsdaten) sowie gemäß der Weiterbildung in den Unteransprüchen auch zu einer Grundadresse komplementäre Adresse (Komplementäradresse) zum Empfänger übertragen werden, daß im Empfänger die übertragenen Inversionsdaten bzw. auch die übertragene Komplementäradresse invertiert werden, daß die übertragene Grundadresse und die übertragenen Originaldaten mit der invertierten Komplementäradresse und den invertierten Inversionsdaten jeweils bitweise verglichen werden bzw. eine Exklusiv- 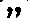 Oder"-Verknüpfung zwischen Original- und Inversionsdaten bzw. auch zwischen Grund- und Komplementäradresse bitweise zu einer logischen 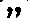 Eins" geführt hat.

Nur bei insgesamt bitweiser Übereinstimmung werden die übertragenen Originaldaten an die über die übertragene Grundadresse ausgewählte Einheit übergeben. Es sind insbesondere keine zusätzlichen Kanäle für Prüf- oder Paritätsbits erforderlich. Einzig die Datenübertragungsrate oder Taktfrequenz ändern sich.

Bei diesem erfindungsgemäßen Datenübertragungsverfahren werden bei jedem Übertragungsvorgang, insbesondere bei jedem Schreibzugriff, Grundadresse und Originaldaten zweimal übertragen, nämlich als Grundadresse mit Originaldaten und als zur Grundadresse komplementäre Komplementäradresse mit Inversionsdaten (invertierte Originaldaten). Durch erneute Inversion der übertragenen Komplementäradresse und der übertragenen Inversionsdaten und durch nachfolgenden Vergleich mit der übertragenen Grundadresse und den übertragenen Originaldaten kann gewährleistet werden, daß jedes übertragene Bit mit zwei elektrischen Spannungspegeln (z.B. 0 V und 5 V) richtig angekommen ist. Somit werden Leitungsschlüsse oder Störungen erkannt.

Beim Schreiben von Daten an eine Zieleinheit ist es erforderlich, diese zwei Übertragungsvorgänge auszuführen, da für das Schreibziel möglichst fehlerfreie Datenresultate erreicht werden sollen. Auch für den Lesevorgang besteht die Möglichkeit, jede Information mit zwei elektrischen Pegeln sicher einzulesen.

Eine Form der Übertragung kann als selbstsynchronisierendes Sicherheitskonzept bezeichnet werden, da bei jedem Übertragungsschritt feststeht, ob Grund- oder Komplementäradresse vorliegt. Würde ein Programm nach dem ersten Übertragungsvorgang durch einen Interrupt unterbrochen werden, könnte ohne Probleme in der Interruptroutine in die Zieleinheit geschrieben werden. Erst bei Fortsetzung des normalen Programms würde sich ein Fehler bemerkbar machen, wenn nach dem zweiten Schreibvorgang die Daten nicht von der Zieleinheit akzeptiert werden. Dann müßte der gesamte Schreibvorgang wiederholt werden.

Dazu wird in dieser bevorzugten Weiterbildung ein Adressbit bzw. eine Adreßleitung zur Unterscheidung zwischen Grund- und Komplementäradresse verwendet. Dieser Verlust einer Adreßleitung bzw. eines Adressbits wird bei diesem selbstsynchronisierenden Sicherheitskonzept durch die hohe Übertragungssicherheit, daß ein Datenwort von einer elektronischen Einheit zur anderen sicher übertragen wird, mehr als kompensiert.

Eine bevorzugte Ausführungsform des Verfahrens ist dadurch gekennzeichnet, daß die Grundadresse, die Originaldaten und die Komplementäradresse, bis sie verglichen worden sind, zwischengespeichert werden. Die einzelnen Daten können so nacheinander, z.B. über ein gemeinsames Datenbussystem, übertragen werden, und erst dann, wenn z.B. auch die Inversionsdaten anstehen, jeweils miteinander verglichen werden.

In einer Weiterbildung dieser Ausführungsform wird die Komplementäradresse entsprechend ihrem höchstwertigen (Komplementär)Bit an anderer Stelle als die Grundadresse abgespeichert. Über das Komplementärbit der Komplementäradresse lassen sich Grundadresse und Komplementäradresse leicht unterscheiden und verschieden weiterarbeiten, insbesondere zwischenspeichern.

Bei einer bevorzugten Ausführungsform wird das höchstwertige (Komplementär)Bit der Komplementäradresse zur Adreßcodierung der Einheit verwendet. Über das Komplementärbit kann z.B. sichergestellt werden, daß, wenn die Einheit nur über eine Grundadresse angesteuert werden kann, nur Grundadressen zur Adreßcodierung der Einheit verwendet werden.

Eine weitere bevorzugte Ausführungsform ist dadurch gekennzeichnet, daß aus der über die Grundadresse ausgewählten Einheit auszugebende Daten als Originaldaten und als invertierte Originaldaten (Inversionsdaten) ausgegeben werden. Damit ist auch ein gegenseitiger Datenaustausch zwischen zwei oder mehreren Einheit über einen zweimaligen Übertragungsvorgang möglich.

In einer Weiterbildung dieser Ausführungsform wird das höchstwertige (Komplementär)Bit der Komplementäradresse zur Invertierung von aus einer Einheit auszugebenden Daten verwendet wird. Über das Komplementärbit der Komplementäradresse lassen sich Grundadresse und Komplementäradresse und auch die zugehörigen Daten leicht unterscheiden und verschieden verarbeiten, insbesondere die Originaldaten invertiert als Inversionsdaten ausgeben.

Bei einer weiteren bevorzugten Ausführungsform des Datenübertragungsverfahrens werden die Grundadresse, die Originaldaten, die Komplementäradresse und die Inversionsdaten auf einem gemeinsamen Datenbus übertragen.

Die Erfindung betrifft in einem zweiten Aspekt auch eine Schaltungsanordnung zur Übertragung von Originaldaten an eine über eine Grundadresse ausgewählte Einheit, vorzugsweise an ein Register.

Die oben genannte Aufgabe wird bei einer Schaltungsanordnung dieser Art erfindungsgemäß dadurch gelöst, daß ein Grundadreß-Zwischenspeicher, in dem die übertragene Grundadresse zwischengespeichert wird, ein Adreß-Zwischenspeicher, in dem die übertragene, komplementäre Grundadresse (Komplementäradresse) zwischengespeichert wird, ein Daten-Zwischenspeicher, in dem die übertragenen Originaldaten zwischengespeichert werden, ein Inverter, der die übertragene Komplementäradresse und die übertragenen Inversionsdaten invertiert, und ein Komparator, der die übertragene Grundadresse mit der invertierten Komplementäradresse und die übertragenen Originaldaten mit den invertierten Inversionsdaten jeweils bitweise vergleicht, vorgesehen sind.

Mit dieser erfindungsgemäßen Schaltungsanordnung lassen sich die oben bezüglich des erfindungsgemäßen Verfahrens bereits aufgezählten Vorteile erzielen.

Bei einer ganz besonders bevorzugten Ausführungsform der Schaltungsanordnung sind der Inverter und der Komparator gemeinsam durch eine (n+m)-fache XOR-Schaltung mit nachgeschalteter UND-Schaltung gebildet. Nur wenn jede XOR-Schaltung an seinem Ausgang z.B. positiv, d.h. auf "logisch 1", ist, führt dies am einzigen Ausgang der UND-Schaltung zu einem OK-Signal, das die Übereinstimmung der verglichenen Daten anzeigt.

In einer anderen vorteilhaften Ausführungsform der Schaltungsanordnung ist dem Adreß-Zwischenspeicher eine Auswahleinrichtung, insbesondere eine Adreßdecodiereinrichtung, nachgeschaltet, die die Übertragung der Originaldaten an die über die Grundadresse ausgewählte Einheit steuert. Über diese Auswahleinrichtung, z.B. ein Demultiplexer, kann die der Grundadresse entsprechende Einheit ausgewählt werden.

Eine bevorzugte Weiterbildung dieser Ausführungsform ist dadurch gekennzeichnet, daß der Auswahleinrichtung eine Adreßlnvertiereinrichtung vorangestellt ist, die die Komplementäradresse in Abhängigkeit ihres höchstwertigen (Komplementär)Bits invertiert.

Bei einer weiteren Ausführungsform der Schaltungsanordnung ist eine Daten-Invertiereinrichtung vorgesehen ist, die die aus einer über die Grundadresse ausgewählten Einheit auszugebenden Daten unter der Grundadresse als Originaldaten und unter der Komplementäradresse als Inversionsdaten ausgibt.

Bei einer vorteilhaften Weiterbildung dieser Ausführungsform ist vorgesehen, daß die Daten-Invertiereinrichtung über das Komplementärbit derart steuerbar ist, daß bei vorhandenem Komplementärbit die Originaldaten als Inversionsdaten invertiert ausgegeben werden.

Insbesondere ergibt sich eine Verwendung dieses Verfahrens und der Schaltungsanordnung zur Datenübertragung in Insassenschutzsystemen zwischen einem zentralen Steuergerät und ausgelagerten Modulen, insbesondere, Sensoren und/oder Aktoren, also Beschleunigungs- oder Precrashsensoren, wie Abstandswarnradar, Gasgeneratoren für Airbags und Gurtstraffer und diversen dezentralen Steuergeräten, beispielsweise für die Seitenaufprallerkennung.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden.

Die gezeigte und beschriebene Ausführungsform ist nicht als abschließende Aufzählung zu verstehen, sondern hat vielmehr beispielhaften Charakter für die Schilderung der Erfindung.
- Figur 1: Darstellung einer geeigneten Schaltungsanordnung ohne Berücksichtigung eines Lesezugriffs
- Figur 2: logischen Schaltplan einer Schaltungsanordnung mit Lese- und Schreibzugriff

Das Datenübertragungsverfahren wird im folgenden jeweils am Beispiel einer Übertragung mit einem 4-Bit-Datenbus 20 näher erläutert, wie desssen Verwendung in einem Insassenschutzsystem vorgesehen ist. Die einzelnen Einheiten des Empfängers sind in diesem Ausführungsbeispiel Register, in denen bestimmte Funktionseigenschaften der jeweiligen Insassenschutzeinrichtung, beispielsweise Verstärkungsfaktoren für Sensorsignale, Auslöseschwellen, Sitzbelegungszustände etc. abgelegt bzw. geändert werden.

Nach genau dem gleichen Schema könnte auch eine Datenübertragung mit beliebiger Datenbusbreite realisiert werden.

An diesen Datenbus 20 ist ein anwenderspezifischer IC (ASIC) 1 als Empfänger, der das logische Schaltbild der Figur aufweist, über einen 4-Bit-Port 2 angeschlossen. Der Sender, bestehend aus einem Mikrocontroller, ist in den Figuren nicht gezeigt, da deren innerer Aufbau nicht näher betrachtet wird. Zur Ansteuerung des ASIC's 1 dienen Steuersignale CS1, CS2, CS, AS, E, R/W, die auf dem Datenbus 20 an den ASIC 1 übertragen werden. In bekannter Weise steht CS für ChipSelect, AS für Adress-Strobe, E für E-Clock und R/W für Read/Write.

Die Datenübertragung erfolgt durch den Microcontroller des Senders, indem dieser Daten und Adressen gemultiplext an den Datenbus 20 angelegt bzw. abfragt.

Die zu übertragende Adressen und die zu übertragenden Daten werden gruppiert jeweils zweimal gesendet, beim ersten Mal als Grundadresse A0, A1, A2 mit Originaldaten D0, ..., D3 und beim zweiten Mal als zur Grundadresse A0, A1, A2 komplementäre Komplementäradresse A0', A1', A2', mit invertierten Originaldaten D0', ..., D3' (Inversionsdaten). Die Adressen sind im Ausführungsbeispiel mit 3 Bit und die Daten jeweils 4-Bit-breit angesetzt. Anstelle eines gemeinsamen 4-Bit-Busses könnte auch ein getrennter Adress- und Datenbus eingesetzt werden. Die Anzahl der Takte zur parallelen Übertragung der Daten würde sich dann von 4 auf 2 halbieren.

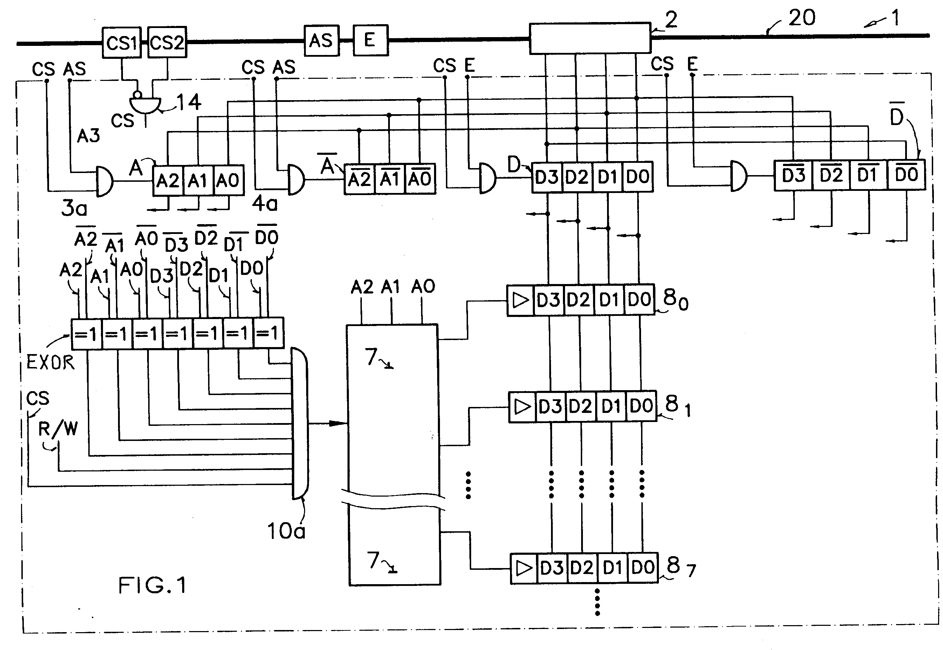

In Figur 1 ist für die Grundadresse A0, A1 A2 der Zwischenspeicher A vorgesehen, für die komplementäre Komplementäradresse A0', A1', A2' der Zwischenspeicher A 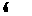 , für die Originaldaten D0, ..., D3 der Zwischenspeicher D und für die invertierten Originaldaten D0', ..., D3' (Inversionsdaten) der Zwischenspeicher D 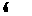 .

Angesteuert über die Flanken von AS, CS und E werden nacheinander die Zwischenspeicher A,A 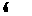 ,D,D 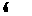 mit den jeweils am Datenbus anliegenden Pegel beschrieben. Hieraus ist bereits erkennbar, daß mit dieser Schaltung zunächst das leichter verständliche zwangssynchronisierte Verfahren durchgeführt werden soll, bei dem die Reihenfolge der Daten auf dem Datenbus 20 vollständig sein muß. Eine Unterscheidbarkeit zwischen Grundadresse und Komplementäradresse ist hier noch nicht vorgesehen.

Im EXOR-Block (EXOR) erfolgt eine Exklusiv- 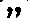 ODER" Verknüpfung von Grundadresse A0, A1, A2 mit der Komplementäradresse A0', A1, A2' sowie der Originaldaten D0, ..., D3 mit den Inversionsdaten D0', ..., D3'. Bei fehlerfreier Übertragung müßte dann jeweils das Ergebnis logisch 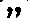 1" sein, so daß bei der folgenden 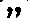 UND"-Verknüpfung 10a aller EXOR-Ausgänge ebenfalls eine 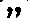 1" bzw. ein logischer 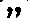 High"-Pegel erreicht wird, auf den hin einerseits der Multiplexer 7 die Grundadresse A0, A1, A2 übernimmt und den Eingang des der Grundadresse entsprechenden Registerblocks 8x freigibt, so daß dieser Registerblock 8x mit den anliegenden Originaldaten D0, ..., D3 beschrieben wird.

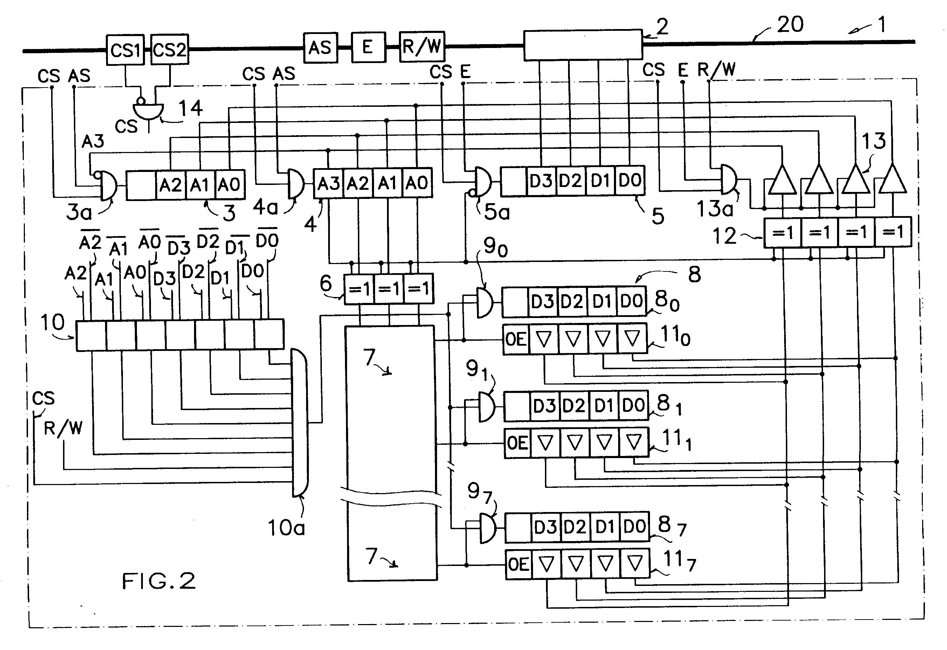

Figur 2 zeigt nun eine erweiterte Schaltungsanordnung mit Lese- und Schreibzugriff und einer Selbstsynchronisation durch das höchste Adressbit A3/A3 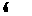 .

Das Schreiben von Originaldaten D0, ..., D3 in ein ausgewähltes von acht Registern 80,...,87 eines Registerblocks 8 läuft folgendermaßen ab: Es soll z. B. der binäre Datenwert 1010b in das erste Register 80 mit der Grundadresse 0001b geschrieben werden. Der erste Übertragungsschritt wird mit folgenden Assemblerbefehlen durchgeführt;
LDAA #$0A Akku A mit Originaldaten laden: $0A = 0000 1010b
STAA $4001 Akku auf Grundadresse speichern: $4001 = 0100 0000 0000 0001b

Mit der Grundadresse $4001 wird der ASIC 1 ausgewählt, dessen ChipSelect-Leitungen CS1, CS2 an die Adreßleitungen A15 und A14 (nicht dargestellt) angeschlossen sind, und über eine UND-Schaltung 14 im ASIC 1 wird ein einziges CS-Signal generiert. A15 ist low-aktiv und A14 high-aktiv. Deswegen hat das High-Nibble der Grundadresse den Wert $4 = 0100b, und das Low-Nibble der Adresse zeigt auf das erste Register und trägt den Wert $1 = 0001b.

In einer ersten Takthälfte des ersten Übertragungsvorgangs wird dann diese Grundadresse bei fallender AS-Flanke (AS="1") in zwei Adreß-Zwischenspeichern (Adreß-Latch), nämlich in einen Grundadreß-Zwischenspeicher 3 (nur die letzten drei Bits A0, A1, A2 der Grundadresse) und in einen AdreßZwischenspeicher 4 (alle vier Bits A0, ..., A3(=0) der Grundadresse) übertragen. Im Grundadreß-Zwischenspeicher 3 kann dabei nur eine Grundadresse mit den letzten drei Bits A0, A2, A3 gespeichert werden, da bei der Grundadresse das vierte Adreßbit A3 immer "0" ist und nur dann aufgrund einer UND-Schaltung 3a mit invertiertem Eingang für das vierte Adreßbit A3 das erforderliche Übernahmetaktsignal LE (Latch Enable) für den Grundadreß-Zwischenspeicher 3 generiert wird. Dagegen wird das Übernahmetaktsignal LE für den AdreßZwischenspeicher 4 durch eine UND-Schaltung 4a von AS und CS, d.h. unabhängig von A3, erzeugt.

In einer zweiten Takthälfte werden dann bei fallendem EClock-Signal (E="1") die am Part 2 anstehenden Originaldaten D0, ..., D3 in den Daten-Zwischenspeicher 5 übertragen. Der Übernahmetakt für diesen Daten-Zwischenspeicher 5 wird durch die logische UND-Schaltung 5a bei entsprechendem CS- und ESignal sowie bei A3="0" generiert, d.h., nur wenn sich im Adreß-Zwischenspeicher 4 eine Grundadresse befindet. Damit ist die erste Hälfte des Schreibvorgangs beendet.

Beim zweiten Übertragungsvorgang müssen die Inversionsdaten D0',..., D3' auf die Komplementäradresse A0, ..., A2, A3(=1) geschrieben werden und werden über den Datenbus 20 an den Port 2 angelegt. Die bitweise Invertierung des Datenworts $A = 1010b ergibt die Adresse $5= 0101b. Dieser Wert wird zur zur Grundadresse komplementären Komplementäradresse $E = 1110b übertragen. Dies geschieht z.B. mit den Assemblerbefehlen:
LDAA $05 Akku A mit Originaldaten laden: $05 = 0000 1010b
STAA $400E Akku auf Grundadresse speichern: $400E = 0100 0000 0000 0001b

In der ersten Zyklushälfte des zweiten Übertragungsvorgangs stehen daher wieder Daten am Datenbus 1 an. Die übertragene Komplementäradresse A0',..., A3' wird jetzt nur noch von dem Adreß-Zwischenspeicher 4 übernommen, da es sich um eine Komplementäradresse handelt, deren höchstwertiges (Komplementär)Bit A3 immer "1" ist und daher kein LE für den Grundadreß-Zwischenspeicher 3 generiert wird. Dadurch wird die sogenannte Selbstsynchronasition erreicht wird.

Dieser Adreß-Zwischenspeicher 4, in den alle Adressen gelangen, ist mit einer Auswahleinrichtung 7 in Form eines 3-BitAdreßdecoder (Demultiplexer) verbunden, dem eine Adreß-Invertiereinrichtung 6 mit drei XOR-Schaltungen als programmierbare Inverter vorgeschaltet ist. Jede XOR-Schaltung ist mit dem Komplementärbit 43 der im Adreß-Zwischenspeichers 4 befindlichen Komplementäradresse verbunden. Durch die bitweise Invertierung der Bits A0', A1', A2' der Komplementäradresse durch die XOR-Schaltungen gelangt stets nur die Grundadresse A0, A1, A2 zur Auswahleinrichtung 7. Diese wählt dann in Abhängigkeit von der Grundadresse einen von acht möglichen Ausgängen an, der zu einem der acht Register 80 bis 87 des Registerblockes 8 führt.

Im ASIC 1 ist außerdem ein Komparator 10 vorgesehen, an den der Grundadreß-Zwischenspeicher 3, der Adreß-Zwischenspeicher 4, der Daten-Zwischenspeicher 5 und der Port 2 angeschlossen sind, wobei die dazu erforderlichen Leitungen nicht gezeigt sind. Dabei sind die drei Bits der Grundadresse A0, A1, A2 und der Komplementäradresse A0', A1', A2' sowie die vier Bits der Originaldaten D0, ..., D3 und der Inversionsdaten D0', ..., D3' paarweise jeweils einer von sieben XOR-Schaltungen zugeführt. Nur wenn die Grundadresse mit der invertierten Komplementäradresse bzw. die Originaldaten mit den invertierten Inversionsdaten bitweise übereinstimmt, liefern alle sieben XOR-Schaltungen des Komparators 10 ein "1"-Signal, wodurch über eine diese Signale zusammenfassende UND-Schaltung 10a dann ein einziges "1"-Signal (OK-Signal) generiert wird.

In der zweiten Zyklushälfte des zweiten Übertragungsvorgangs stehen die Inversionsdaten D0', ..., D3' nur kurze Zeit am Port 2 des ASIC's 1 zur Verfügung. Wenn diese Inversionsdaten kurzzeitig anstehen, werden im Komparator 10 jeweils Grundadresse und Originaldaten mit Komplementäradresse bzw. mit Inversionsdaten verglichen. Ist dabei jedes Bit zweimal mit unterschiedlichem Pegel vorhanden, so wird am Ausgang der UND-Schaltung 10a das aktive OK-Signal generiert. Dieses Signal ist über eine entsprechende UND-Schaltungen 90, ..., 97 mit dem entsprechenden Übernahmetakt der Auswahleinrichtung 7 für das ausgewählte Register des Registerblockes 8 verbunden. Daher kann das ausgewählte Register die Originaldaten D0, ..., D3 des Daten-Zwischenspeichers 5 übernehmen. Damit ist der Schreibvorgang beendet.

Tritt dagegen bei der Übertragung ein Fehler auf, liefert der Komparator 10 bzw. die UND-Schaltung 10a kein OK-Signal ("1"), und die Originaldaten im Daten-Zwischenspeicher 5 können nicht in das ausgewählte Register geschrieben werden, d. h., die übertragenen, zu speichernden Originaldaten werden nicht akzeptiert.

Der beschriebene zeitliche Ablauf eines Schreibvorgangs läßt sich daher wie folgt darstellen:
- 1.Schreibvorgang: Grundadresse in beide Adreß-Zwischenspeicher, Originaldaten in den Daten-Zwischenspeicher
- 2.Schreibvorgang: Komplementäradresse nur in den AdreßZwischenspeicher, Invertierte Daten kurzzeitig am ASICPort
- Vergleich: Vergleich von Adreß- und Datenbits mit Komplement
- Register auswählen: Register durch Adreßdecoder auswählen Originaldaten vom Daten-Zwischenspeicher ins ausgewählte Register kopieren

Für den Lesezugriff ist nur ein Buszyklus erforderlich. Mit einem Lesebefehl kann also eine Registerinformation über den Datenbus 20 in den Mikrocontroller geholt werden. Das Lesen kann jedoch auf zweierlei Arten erfolgen: Lesen von der Grundadresse und Lesen von der Komplementäradresse. Folgende Assemblerbefehle sind dazu erforderlich:
LDAA $4001: Akku A mit Originaldaten des Registers 8 laden:
$4001 = 0100 0000 0000 0001b
LDAA $400E: Akku A mit invertierten Daten des Registers 8 laden:
$400E = 0100 0000 0000 1110b

Der Vorgang beginnt mit der jeweiligen Übergabe der Grundadresse in den Adress-Zwischenspeicher 4. Daraufhin wird die Auswahleinrichtung 7, wie oben beschreiben, mit Hilfe der drei XOR-Schaltungen als Invertiereinrichtung 6 mit der Grundadresse angesteuert und wählt das gewünschte Register 81 aus. Die in diesem enthaltenen Daten werden durch ein OE(Output Enable)-Signal an einem Ausgabetreiber 110, ..., 117 der Auswahleinrichtung 7 zum Auslesen freigeschaltet. Der Grundadreß-Zwischenspeicher 3 wird beim Lesevorgang nicht benötigt.

Mit entsprechenden E- und R/W-Signalen werden Tristate-Treiber 13 und damit die Verbindung zum Port 2 freigeschaltet. Es stehen nun die Daten im ausgewählten Register 81 an den bidirektionalen Pins des Port 2 bzw. des ASIC's 1 zum Abholen für den Mikrocontroller über den Datenbus 20 bereit. Er erhält beim Lesen auf der Grundadresse die Orgininaldaten und beim Lesen auf der Komplementäradresse die invertierten Daten, weil auch hier vier XOR-Schaltungen als Daten-Invertiereinrichtung 12 vor den Tristate-Ausgängen 13 aufgrund des Komplimentärbits A3 der Komplementäradresse die Originaldaten zu Inversionsdaten invertieren.

Der beschrieben zeitliche Ablauf eines Lesevorgangs läßt sich daher wie folgt darstellen:
- Lesevorgang: Adresse nur in den Adreß-Zwischenspeicher
- Register auswählen: Register durch durch Auswahleinrichtung auswählen
- Tristate-Ausgänge: Registerdaten bis zum ASIC-Port freischalten Daten vom Mikrocontroller abholen

## Patentansprüche

1. Verfahren zur Datenübertragung, bei dem von einem Sender m binäre Originaldaten (D0, ..., Dm) parallel über m Datenleitungen an eine ausgewählte Einheit eines Empfängers, vorzugsweise an ein Register (80, ..., 87), übertragen werden, wobei
a) nachfolgend von dem Sender auch die invertierten Originaldaten (Inversionsdaten) (D0', ..., Dm') an den Empfänger übertragen werden und
b) die übertragenen Originaldaten (D0, ..., Dm) nur dann an die ausgewählte Einheit des Empfängers übergeben werden, wenn
b1) die übertragenen Originaldaten (D0, ..., Dm) mit im Empfänger gebildeten nochmals invertierten Inversionsdaten (D0', ..., Dm') jeweils bitweise (0, ..., m) übereinstimmen oder
b2) die übertragenen Originaldaten (D0, ..., Dm) mit den Inversionsdaten (D0', ..., Dm') im Empfänger bitweise (0, ..., m) exklusiv 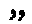 ODER" verknüpft jeweils eine logische 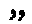 1" ergeben.

2. Verfahren nach Anspruch 1, wobei die binären Originaldaten (D0, ..., Dm) an eine über eine binäre Grundadresse (A0, ..., An) ausgewählte Einheit übergeben werden, dadurch gekennzeichnet, daß
a) nachfolgend auch die komplementäre Grundadresse (Komplementäradresse) (A0', ..., An', Ak) übertragen wird und die übertragenen Originaldaten (D0, ..., Dm) nur dann an die über die übertragene Grundadresse (A0, ..., An) ausgewählte Einheit übergeben werden, wenn
a1) die übertragenen Originaldaten (D0, ..., Dm) mit den nochmals invertierten Inversionsdaten (D0', ..., Dm') und übertragene Grundadresse (A0, ..., An) mit der nochmals invertierten Komplementäradresse (A0', ..., An') jeweils bitweise (0, ..., m) übereinstimmen oder
a2) die übertragenen Originaldaten (D0, ..., Dm) mit den Inversionsdaten (D0', ..., Dm') und die Grundadresse (A0, ..., An) mit der übertragenen Komplementäradresse (A0', ..., An', Ak) jeweils bitweise (0, ..., m) exklusiv 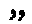 ODER" verknüpft eine logische 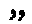 1" ergeben.

3. Verfahren nach Anspruch 1, dadurch gekennzeichnet, daß die Originaldaten (D0, ..., Dm) zwischengespeichert werden, bis sie verglichen worden sind.

4. Verfahren nach Anspruch 2, dadurch gekennzeichnet, daß die Originaldaten (D0, ..., Dm), die Grundadresse (A0, ..., An), und die Komplementäradresse (A0', ..., An', Ak) zwischengespeichert werden, bis sie verglichen worden sind.

5. Verfahren nach Anspruch 4, dadurch gekennzeichnet, daß in Grund- und Komplementäradresse (A0', ..., An', Ak) zumindest in ein Bit, vorzugsweise jeweils das höchstwertige (Komplementär)Bit (Ak), zur Unterscheidung zwischen Grund- und Komplementäradresse (A0', ..., An', Ak) mit unterschiedlichem Inhalt (0/1) versehen wird.

6. Verfahren nach Anspruch 5, dadurch gekennzeichnet, daß das höchstwertige (Komplementär)Bit (Ak) der Komplementäradresse (A0', ..., An', Ak) zur Invertierung der Komplementäradresse (A0', ..., An', Ak) genutzt wird, indem dieses Bit exklusiv 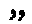 ODER" mit den anderen Bits der Komplementäradresse (A0', ..., An') verknüpft wird.

7. Verfahren nach einem der vorhergehenden Ansprüche, dadurch gekennzeichnet, daß aus der über die Grundadresse (A0, ..., An) ausgewählten Einheit auszugebende Daten als Originaldaten (D0, ..., Dm) und als invertierte Originaldaten (Inversionsdaten) (D0',..., Dm') ausgegeben werden.

8. Verfahren nach Anspruch 5, dadurch gekennzeichnet, daß das höchstwertige (Komplementär)Bit (Ak) der Komplementäradresse (A0', ..., An', Ak) zur Invertierung von aus einer Einheit auszugebenden Daten (D0, ..., Dm) verwendet wird.

9. Verfahren nach einem der vorhergehenden Ansprüche, dadurch gekennzeichnet, daß die Grundadresse (A0, ..., An), die Originaldaten (D0, ..., Dm), die Komplementäradresse (A0', ..., An', Ak) und die Inversionsdaten (D0',..., Dm') auf einem gemeinsamen m-Bit Datenbus (20) übertragen werden.

10. Schaltungsanordnung eines Empfängers zur Übertragung von Originaldaten (D0, ..., Dm) von einem Sender an eine über eine Grundadresse (A0, ..., An) ausgewählte Einheit dieses Empfängers, vorzugsweise an ein Register (80, ..., 87), insbesondere zur Durchführung des Datenübertragungsverfahrens nach einem der Ansprüche 2 bis 7, gekennzeichnet durch:
a) einen Grundadreß-Zwischenspeicher (3), in dem die übertragene Grundadresse (A0, ..., An) zwischengespeichert wird,
b) einen Adreß-Zwischenspeicher (4), in dem die übertragene, komplementäre Grundadresse (Komplementäradresse) (A0', ..., An', Ak) zwischengespeichert wird,
c) einen Daten-Zwischenspeicher (5), in dem die übertragenen Originaldaten (D0, ..., Dm) zwischengespeichert werden,
d) einen Inverter, der die übertragene Komplementäradresse (A0',..., Am') und die übertragenen Inversionsdaten (D0', ..., Dm') invertiert, und
e) einen Komparator, der die übertragene Grundadresse (A0, ..., An) mit der invertierten Komplementäradresse (A0', ..., An') und die übertragenen Originaldaten (D0, ..., Dm) mit den invertierten Inversionsdaten (D0', ..., Dm') bitweise (0, ..., n) bzw. (0, ..., m) jeweils vergleicht.

11. Schaltungsanordnung nach Anspruch 10, dadurch gekennzeichnet, daß der Inverter und der Komparator gemeinsam durch eine (n+m)-fache XOR-Schaltung (10) mit nachgeschalteter UND-Schaltung (10a) gebildet sind.

12. Schaltungsanordnung nach Anspruch 10 oder 11, dadurch gekennzeichnet, daß dem Adreß-Zwischenspeicher (4) eine Auswahleinrichtung (7), insbesondere eine Adreßdecodiereinrichtung, nachgeschaltet ist, die die Übertragung der Originaldaten (D0, ..., Dm) an die über die Grundadresse (A0, ..., An) ausgewählte Einheit steuert.

13. Schaltungsanordnung nach Anspruch 12, dadurch gekennzeichnet, daß der Auswahleinrichtung (7) eine Adreß-Invertiereinrichtung (6) vorangestellt ist, die die Komplementäradresse (A0', ..., An', Ak) in Abhängigkeit ihres höchstwertigen (Komplementär)Bits (Ak) invertiert.

14. Schaltungsanordnung nach einem der Ansprüche 10 bis 13, dadurch gekennzeichnet, daß eine Daten-Invertiereinrichtung (12) vorgesehen ist, die die aus einer über die Grundadresse (A0, ..., An) ausgewählten Einheit auszugebenden Daten (D0, ..., Dm) unter der Grundadresse (A0, ..., An) als Originaldaten (D0, ..., Dm) und unter der Komplementäradresse (A0' , ..., An', Ak) als Inversionsdaten (D0', ..., Dm') ausgibt.

15. Schaltungsanordnung nach Anspruch 14, dadurch gekennzeichnet, daß die Daten-Invertiereinrichtung (12) über das Komplementärbit (Ak) derart steuerbar ist, daß bei vorhandenem Komplementärbit (Ak) die Originaldaten (D0,..., Dm) als Inversionsdaten (D0', ..., Dm') invertiert ausgegeben werden.

16. Verwendung des Verfahrens sowie der Schaltungsanordnung nach einem der vorangehenden Ansprüche für die Datenübertragung in Insassenschutzsystemen zwischen einer Zentraleinheit und Insassenschutzeinrichtungen.
